# EUROPEAN PATENT APPLICATION

(11) **EP 4 290 471 A1**
(43) Date of publication of application: **13.12.2023**
(21) Application number: 23177397.9
(22) Date of filing: 05.06.2023
(51) Int. Cl.: G06V 10/52

(54) **SYSTEMS AND METHODS FOR ARTIFICIAL INTELLIGENCE INFERENCE PLATFORM AND SENSOR CORRELATION**

(30) Priority: 06.06.2022 US 202263349460 P; 16.11.2022 US 202263425729 P
(71) Applicant: Palantir Technologies Inc., Denver, CO 80202 (US)
(72) Inventor: CROSS, Jonathan, Maryland (US); CHEN, Qinfeng, New York (US); IMIG, Robert, Washington (US)
(74) Representative: Derry, Paul Stefan

(57) **Abstract**

Systems and methods for performing sensor correlation by a plurality of edge devices are disclosed. For example, a method includes: receiving a first set of edge data from a first edge device of the plurality of edge devices; receiving a second set of edge data from a second edge device of the plurality of edge devices, the second edge device being different from the first edge device; analyzing the first set of edge data using one or more computing models to determine a first object detected in the first set of edge data; analyzing the second set of edge data using the one or more computing models to determine a second object detected in the second set of edge data; and determining whether the first object and the second object are a same object based upon one or more object parameters.

## Description

### CROSS REFERENCE TO RELATED APPLICATIONS

This application claims priority to U.S. Provisional Application No. 63/349,460, filed June 6, 2022, and U.S. Provisional Application No. 63/425,729, filed November 16, 2022, which are incorporated by reference herein in their entireties for all purposes.

### TECHNICAL FIELD

Certain embodiments of the present disclosure are directed to systems and methods for using artificial intelligence (AI) models and other computational models. More particularly, some embodiments of the present disclosure provide systems and methods for sensor correlation in connection with the use of AI and computational models.

### BACKGROUND

Artificial intelligence (AI) is widely used in analyzing data to facilitate object detection, prediction, decision making, and other uses. For example, AI inference is a process of using AI models to make a prediction. AI inference often needs a large number of computing resources and memory resources.

Edge devices (e.g., devices with sensing and/or computing capability) can be deployed to dispersed locations on earth or in space. Some edge devices may include one or more sensors for collecting sensor data and/or one or more computing resources to process data (e.g., identifying objects). A satellite can include and/or integrate with edge devices. As an example, edge devices can be deployed to various areas to complete certain tasks.

Hence it is desirable to improve the techniques for AI inference and sensor correlation.

### SUMMARY

Certain embodiments of the present disclosure are directed to systems and methods for using artificial intelligence (AI) models and other computational models. More particularly, some embodiments of the present disclosure provide systems and methods for sensor correlation in connection with the use of AI and computational models.

According to some embodiments, a method for sensor correlation by a plurality of edge devices comprises: receiving a first set of edge data from a first edge device of the plurality of edge devices; receiving a second set of edge data from a second edge device of the plurality of edge devices, the second edge device being different from the first edge device; analyzing the first set of edge data using one or more computing models to determine a first object detected in the first set of edge data; analyzing the second set of edge data using the one or more computing models to determine a second object detected in the second set of edge data; and determining whether the first object and the second object are a same object based upon one or more object parameters; wherein the method is performed using one or more processors.

According to some embodiments, a system for sensor correlation by a plurality of edge devices comprises: one or more memories having instructions stored therein; and one or more processors configured to execute the instructions and perform operations comprising: receiving a first set of edge data from a first edge device of the plurality of edge devices; receiving a second set of edge data from a second edge device of the plurality of edge devices, the second edge device being different from the first edge device; analyzing the first set of edge data using one or more computing models to determine a first object detected in the first set of edge data; analyzing the second set of edge data using the one or more computing models to determine a second object detected in the second set of edge data; and determining whether the first object and the second object are a same object based upon one or more object parameters.

According to some embodiments, a method for sensor correlation by a plurality of edge devices comprises: receiving a first set of edge data from a first edge device of the plurality of edge devices; receiving a second set of edge data from a second edge device of the plurality of edge devices, the second edge device being different from the first edge device; analyzing the first set of edge data using one or more computing models to determine a first object detected in the first set of edge data and a first confidence parameter associated with the first object; analyzing the second set of edge data using the one or more computing models to determine a second object detected in the second set of edge data and a second confidence parameter associated with the second object; determining whether the first confidence parameter and the second confidence parameter are both at or above a confidence threshold; and determining whether the first object and the second object are a same object based upon one or more object parameters; wherein the method is performed using one or more processors.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

The accompanying drawings are incorporated in and constitute a part of this specification and, together with the description, explain the features and principles of the disclosed embodiments. In the drawings,
FIG. 1 depicts an illustrative diagram of an artificial intelligence (AI) platform (AIP) operation environment, in accordance with certain embodiments of the present disclosure;
FIG. 2 illustrates an AIP operation environment according to certain embodiments of the present disclosure;
FIG. 3 is a simplified diagram showing a method for AIP sensor correlations according to certain embodiments of the present disclosure;
FIG. 4 is a simplified diagram showing a method for AIP sensor correlations according to certain embodiments of the present disclosure;
FIG. 5 is an example implementation of an operation environment for AIP, in accordance with certain embodiments of the present disclosure; and
FIG. 6 is a simplified diagram showing a computing system for implementing a system for sensor correlations in accordance with at least one example set forth in the disclosure.

### DETAILED DESCRIPTION

Conventional systems and methods are often not capable of efficiently or accurately correlating sensor data as collected by the sensors of different edge devices, such as devices with sensing and/or computing capability, especially when these devices are deployed to dispersed locations on earth (e.g., cars) or in space (e.g., satellites) to complete certain tasks.

Various embodiments of the present disclosure can achieve benefits and/or improvements by a computing system incorporating multiple edge devices and coordinating operations of sensors on the edge devices and the edge devices. In some embodiments, benefits include significant improvements, including, for example, improved accuracy in determining whether two objects as detected by the sensors are a same object based upon one or more object parameters. In certain embodiments, benefits include improved sensor data quality associated with an object after determining whether objects detected by sensors and/or edge devices are the same object. In some embodiments, benefits include improved sensor data effectiveness by determining whether certain devices are capable of detecting a target object and/or a target area such that only the devices with better accuracy in object detection is relied upon for receiving sensor data. In certain embodiments, benefits include improved performance by the edge devices and sensors thereof by sending edge instructions to the edge devices such that, in response to the received edge instructions, the edge devices can adjust sensor operation parameters (e.g., configurations, configuration parameters) and/or edge operation parameters, for example, to better collect sensor data associated with a target object and/or a target area.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

Although illustrative methods may be represented by one or more drawings (e.g., flow diagrams, communication flows, etc.), the drawings should not be interpreted as implying any requirement of, or particular order among or between, various steps disclosed herein. However, certain some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items, and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information.

At least some embodiments of the present disclosure are directed to systems and methods for providing sensor correlation, for example, to determine whether two or more sensors are detecting the same target object. In certain embodiments, a plurality of edge devices include a respective AI Inference Platform (AIP), where the AIP includes one or more sensor interfaces with one or more sensors and one or more model interfaces with one or more models. In some embodiments, the system includes a processing node (e.g., a processing device) that is an edge device configured to determine whether two or more edge devices detect or are capable to detect a target object and/or a target area. In certain embodiments, the processing node is configured to send one or more edge instructions to one or more edge devices. In some embodiments, the one or more edge instructions include an instruction related to the target object. In certain embodiments, the processing device and/or an edge device is configured to designate a second processing device. In some embodiments, the processing device and/or the second processing device is one of the plurality of edge devices. In certain embodiments, the processing device is configured to receive sensor data and/or processed sensor data from the plurality of edge devices. In some embodiments, in response to the received edge instruction, an edge device is configured to adjust sensor operation parameters (e.g., configurations, configuration parameters) and/or edge operation parameters, for example, to better collect sensor data associated with a target object or a target area.

At least some embodiments of the present disclosure are directed to systems and methods for selecting, adding, updating, configuring, and managing data computing models dynamically. In certain embodiments, an AIP includes a model controller to select, manage, configure, deploy, add, update, start, replace, and/or remove one or more computing models within the AIP operation environment. In some embodiments, the model controller (e.g., a software module or component) is configured to interact with one or more model repositories (e.g., a model marketplace, a model hub) and one or more container infrastructures to select, manage, configure, deploy, add, update, start, replace, and/or remove one or more computing models within the AIP operation environment.

According to certain embodiments, the one or more model repositories are disposed on in one or more cloud servers, one or more servers on the ground (e.g., not at the edge), one or more computing devices, and/or one or more other data repositories. In some examples, the one or more container infrastructures run on one or more edge devices. In certain embodiments, an edge device refers to a computing device operating at the edge (e.g., not at a central server, or a cloud center). In some embodiments, an edge device is integrated with or disposed on a carrier (e.g., a vehicle, an aircraft, a satellite) deployed to a site with actions taken place. In certain embodiments, an edge device includes one or more sensors configured to collect data associated with the actions. In certain examples, at least one of the one or more container infrastructures runs on a computing device that is not an edge device. In some embodiments, a container infrastructure can instantiate, update, edit, or disconnect one or more models according to the received instructions (e.g., via an API) and/or data (e.g., configuration data).

In certain embodiments, the AIP orchestrates between input sensor data and output model data. For example, one or more components of AIP are utilizing open standard formats (e.g., input data format, output data format). As an example, AIP takes care of the decoding of the input data, orchestration between processors and artificial intelligence (AI) models, and then packages up the results into an open output format for downstream consumers (e.g., a software application). According to some embodiments, an AIP system includes one or more AIPs to orchestrate one or more sensors, one or more edge devices, one or more user devices, one or more models, one or more container infrastructures, and one or more model repositories. In certain embodiments, at least some of the one or more sensors, one or more edge devices, one or more user devices, one or more models, one or more container infrastructures, and one or more model repositories are each associated with an AIP.

According to some embodiments, one or more AIPs, one or more sensors, and one or more models are disposed in an edge device. For example, the edge device is a satellite, and the sensor is an orbiting sensor. As an example, an edge device is a computer device integrated into or an aircraft, a submarine, and/or a vehicle. As an example, an edge device includes one or more sensors in the air, in the space, under the sea, in the water, on the land, and/or at other locations. In certain examples, an edge device is a physical device including one or more sensors, an AIP, and/or one or more model(s). In some embodiments, a model, or referred to as a computing model or as an algorithm, includes a model to process data. A model includes, for example, an AI model, a machine learning (ML) model, a deep learning (DL) model, an image computing model, a physics model, simple heuristics, rules, algorithms, a math model, other computing models, and/or a combination thereof. In some examples, the model is configured to generate an insight based on the processed sensor data.

According to certain embodiments, one or more models can be implemented on one or more processors (e.g., one or more central processing units (CPUs), one or more graphics processing units (GPUs), one or more digital signal processors (DSPs), one or more microprocessors, one or more processors, etc.) utilizing certain respective computing resources, where a model can also be referred to as a model processor (e.g., a verification processor, a geo-registration processor, etc.). In some embodiments, an insight, also referred to as model inference, refers to an output of a computing model. In certain examples, the AIP is configured to transmit collected sensor data, processed sensor data, and/or the insight to a user device (e.g., a server, a base station, a central station, a center node, a computing device at a mothership, etc.), for example, via a software interface (e.g., an application programming interface). In some embodiments, an API refers to any software interface coupling two or more software components including, for example, an application programming interface, a web service interface, and/or the like. In some embodiments, a software interface refers to a part of a software component or one or more software components interacting with another software component(s).

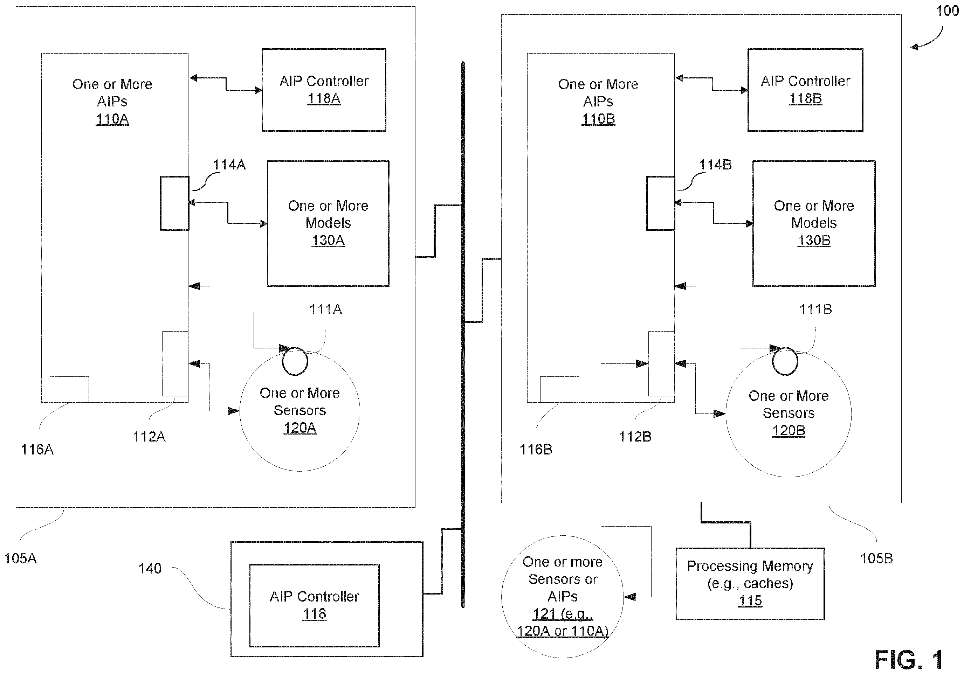

FIG. 1 illustrates an AIP operation environment 100 according to certain embodiments of the present disclosure. FIG. 1 is merely an example. One of ordinary skill in the art would recognize many variations, alternatives, and modifications. According to some embodiments, the AIP operation environment 100 includes an edge device 105A, an edge device 105B, one or more user devices 140, one or more sensors or AIPs 121, one or more processing memories 115 (e.g., caches) and/or one or more model repositories 160. In some examples, an AIP system includes one or more components in the AIP operation environment 100. According to certain embodiments, the edge devices 105A, 105B include AIPs 110A, 110B, AIP controllers 118A, 118B, one or more sensors 120A, 120B, and/or one or more models 130A, 130B respectively. In some embodiments, the AIPs 110A, 110B include data APIs 112A, 112B, inference APIs 114A, 114B, and/or open APIs 116A, 116B respectively. In certain embodiments, the one or more sensors 120A and 120B include one or more sensor API 111A and 111B. Although the above has been shown using a selected group of components for the AIP operation environment 110, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present specification.

According to some embodiments, the one or more models 130A and 130B include one or more computing models, such as AI models, machine learning models, deep learning models, image processing models, physics models, simple heuristics, rules, algorithms, math models, other computing models, and/or a combination thereof. For example, the one or more models 130A and 130B include one or more large language models (LLMs). In certain embodiments, at least a part of or all of the one or more models 130A and 130B include an open interface, for example, an interface interacted with or implemented by at least the inference API 114A and 114B. In some embodiments, the one or more models 130A and 130B are configured to generate one or more model inferences.

According to certain embodiments, the data API 112A and 112B are configured to interface with the one or more sensors 120A and 112B respectively. In some examples, the data API (e.g., the data API 112A, the data API 112B) includes a specific data format (e.g., a predefined data format) or data stream format (e.g., a predefined data packet format) for a type of sensor. As an example, the data API includes a first data format for a first sensor type (e.g., an image sensor) and a second data format for a second sensor type (e.g., a motion sensor), where the first data format is different from the second data format. For example, the data API is configured to receive various sensor feeds. As an example, the data API is configured to receive a sensor feed with data format information. In some embodiments, the data API is defined in the AIP.

In certain examples, the AIP (110A, 110B) is configured to receive sensor data via the data API (112A, 112B). In some examples, the AIP (110A, 110B)is configured to process the received sensor data received from the data API (112A, 112B). In certain examples, the AIP (110A, 110B) includes one or more models, computing units, and/or storage units. For example, the AIP (110A, 110B) is configured to decode the sensor data. As an example, the AIP (110A, 110B)is configured to extract a single frame from video data. In one example, the AIP (110A, 110B) is configured to decode the extracted single frame. For example, the AIP (110A, 110B) includes one or more AI models to recognize objects or patterns in the sensor data. As an example, the AIP (110A, 110B) is configured to combine data.

In some examples, the AIP 110A, 110B and/or the inference API 114A, 114B is configured to couple (e.g., connect, operationally couple) to the one or more models 130A, 130B respectively. In certain examples, for a coupled (e.g., connected) model 130A or 130B, the AIP is configured to send command, data, and/or parameter to the coupled model 130A or 130B and receive output data (e.g., memory location of the output data) from the coupled model 130A or 130B. In some embodiments, the AIP is configured to couple to the one or more models via the respective inference API. In certain examples, the inference API 114A or 114B includes a predetermined interface to couple to the one or more models 130A or 130B. In some examples, the inference API 114A or 114B includes a dynamically configurable interface to couple to the one or more models 130A or 130B. In certain embodiments, the inference API 114A or 114B is configured and/or updated by the model controller. In some embodiments, the inference API 114 is configured and/or updated by the model controller based upon information from one or more container infrastructures. In some embodiments, the interface specification is predetermined but the system can dynamically add and/or remove models and/or processors that conform to that specification at runtime. In certain embodiments, the interface specification is predetermined but the system can dynamically add and/or remove models and/or processors according to the information from the container infrastructure, and/or the model controller, at runtime.

In certain examples, the inference API (114A, 114B) is configured to couple to the one or more models (130A, 130B) based upon a configuration (e.g., a system configuration, a user configuration) and/or an input (e.g., a user input, an input received via a software interface). In some embodiments, the inference API (114A, 114B) is configured to couple to the one or more models (130A, 130B) based upon a configuration and/or an input that is set up by the model controller and/or the container infrastructure. In some embodiments, the inference API (114A, 114B) is configured to couple to the respective one or more models (130A, 130B) automatically or dynamically based on the processed sensor data. In certain examples, the AIP (110A, 110B) is configured to transmit raw and/or processed sensor data to the one or more models (130A, 130B) via the inference API (114A, 114B).

According to some embodiments, the AIP (110A, 110B) is configured to change the one or more models (130A, 130B) coupled via the inference API (114A, 114B) dynamically. In certain embodiments, the AIP (110A, 110B) is configured to change the one or more models (130A, 130B) dynamically when the AIP (110A, 110B) is running. In some examples, the AIP (110A, 110B) is configured to change the one or more models (130A, 130B) based upon a configuration (e.g., a system configuration, a user configuration) and/or an input (e.g., a user input, an input received via a software interface). In certain examples, the AIP (110A, 110B) is configured to update the one or more models (130A, 130B) via the model controller and/or the container infrastructure.

According to certain embodiments, the AIP (110A, 110B) is configured to change the one or more models (130A, 130B) automatically (e.g., based on a data characteristic) or dynamically based on the raw sensor data, processed sensor data and/or operating environment constraints including, for example, power consumption, bandwidth availability, and/or the like. As an example, the AIP (110A, 110B) is configured to change the one or more models (130A, 130B) in response to changes to the sensor data collected via the one or more sensors (120A, 120B). In certain examples, the AIP (110A, 110B) is configured to change the one or more models (130A, 130B) without affecting the connection to the one or more sensors (120A, 120B). In some examples, the AIP (110A, 110B) is configured to upgrade the one or more models (130A, 130B) without affecting the connection to the one or more sensors (120A, 120B). In certain examples, the AIP (110A, 110B) is configured to replace the one or more models (130A, 130B) with a new model without affecting the connection to the one or more sensors (120A, 120B). In some examples, the one or more models (130A, 130B) is changed, upgraded, and/or replaced by a push operation in the operation environment 100. In certain examples, the one or more models (130A, 130B) is changed, upgraded, and/or replaced by a pull operation in the operation environment 100. In some examples, a model on a specific device queries AIP for previously processed sensor data statistics to improve (e.g., optimize) its internal architecture (e.g., upgraded or updated) by a pull operation.

According to some embodiments, a processing device is configured to receive a first set of edge data from a first edge device 105A. In some embodiments, the processing device can be an edge device 105A or 105B and/or a computing device (e.g., the user device 140). In certain embodiments, the processing device is configured to receive a second set of edge data from a second edge device 105B, where the second edge device is different from the first edge device. In some embodiments, the processing device includes an AIP for communication with other devices in the system. In certain embodiments, the processing device is an edge device. In some embodiments, the processing device receives edge data from three or more edge devices, for example, from the one or more sensors or AIPs 121.

According to certain embodiments, the edge data can be of data characteristics from different edge devices. In some embodiments, the edge data can be raw sensor data (e.g., a stream of video, raw image data, etc.). In certain embodiments, the edge data can be processed sensor data, for example, filtered sensor data, and/or compressed sensor data. In some embodiments, the edge data can be processed sensor data, for example, the processed sensor data including model inferences and/or parameters of one or more detected objects. In certain embodiments, the one or more object parameters include at least one selected from a group consisting of a location parameter, a temporal parameter, a speed parameter, a shape parameter, an object image parameter, a metric (e.g., a confidence score) associated with a detected object that is generated by the one or more models (e.g., 130A, 130B).

According to some embodiments, the processing device is configured to analyze the first set of edge data using one or more computing models (e.g., 130A, 130B), for examples, the computing models directly coupled to or hosted in the processing device. In certain embodiments, the processing device is configured to determine a first object detected in the first set of edge data based upon the analysis. According to certain embodiments, the processing device is configured to analyze the second set of edge data using one or more computing models (e.g., 130A, 130B), for examples, the computing models directly coupled to or hosted in the processing device. In some embodiments, the processing device is configured to determine a second object detected in the second set of edge data.

In some embodiments, the processing device is configured to determine whether the first object and the second object are the same object based upon one or more object parameters including, for example, a location parameter, a temporal parameter, a speed parameter, an object type parameter, a size parameter, a shape parameter, a confidence parameter, an object image parameter, and an electronic signature. In certain embodiments, a confidence parameter (e.g., a confidence score, a metric parameter) is associated with the first object and/or the second object. For example, in some embodiments, a first confidence parameter or score is associated with the first object, and a second confidence parameter or score is associated with the second object, such that the processing device is configured to determine whether the first object and the second object are the same object when the first confidence parameter or score and the second confidence parameter or score are both determined to be at or above a certain confidence threshold, indicating that the computing models (e.g., 130A, 130B) have a certain level of confidence in the analysis of the first and second objects, thereby improving the reliability of the decision of the processing device when the first and second objects are determined to be the same object. In some embodiments, the processing device may transform the received data (e.g., raw data, raw image, edge data) into a respective format depending on the device the data originated from and/or the models configured to receive the transformed data. In certain examples, the processing device may generate first transformed data in a first format for data from a first edge device and second transformed data in a second format for data from a second edge device different from the first edge device. In some examples, the processing device may generate first transformed data in a first format for data for a first model and second transformed data in a second format for data from a second model different from the first model. In certain embodiments, these transformations may be carried out by one or more models connected to (e.g., via a software interface, running on a different device, etc.) or integrated with the device. In some embodiments, the processing device may select data to be transmitted from the raw data, the first transformed data, the second transformed data, and a combination thereof.

According to certain embodiments, the processing device is configured to generate an edge instruction based on the determination, the first set of edge data, and the second set of edge data. In some embodiments, the processing device is configured to transmit the edge instruction to the first edge device 105A or the second edge device 105B. In some embodiments, in response to the first object and the second object being determined to be the same object, the processing device is configured to generate an edge instruction based upon the determined object, the first set of edge data, and the second set of edge data; and transmitting the edge instruction to the second edge device 105B. In some embodiments, in response to the first object and the second object being determined to be the same object, the processing device is configured to determine an operation parameter (e.g., a configuration, a configuration parameter) of the second edge device 105B and generate an edge instruction based upon the determined operation parameter, the first set of edge data, and the second set of edge data; and transmitting the edge instruction to the second edge device 105B.

In certain embodiments, in response to the first object and the second object being determined to the same object, the processing device is configured to generate a calibration based on the first edge data, the second set of edge data, and the determined same object. In some embodiments, the calibration includes, for example, a calibration function, one or more calibration parameters, and/or the like. In certain embodiments, the processing device is configured to apply the calibration to the first set of edge data and/or the second set of edge data. In some embodiments, the processing device is configured to provide the calibration to a third edge device (e.g., different from the first edge device, different from the second edge device) to cause the calibration to be applied to a third set of edge data collected by the third edge device (e.g., data collected by sensors associated with the third edge device). By determining that an object in the first edge data and the second edge data are the same object, calibration can be performed between respective edge devices. For example, the respective position of each edge device with respect to the first and second object can be determined based on determining that the first and second object is the same object. Furthermore, calibration can be performed by determining how the first object and second object appear different from each other in the first sensor data and second sensor data. For example, sensor data from a sensor that is known to be accurate can be used to correct sensor data from a sensor that is known or suspected to be inaccurate.

According to certain embodiments, an edge instruction includes a sensor command and/or an edge command. In some embodiments, the sensor command includes one or more sensor parameters (e.g., a detection angle, a detection range, an optical sensor zoom, a sensor resolution, etc.). In certain embodiments, the edge command includes one or more edge device parameters (e.g., an edge device location, an edge device speed, an edge device direction, an edge device height, etc.). In some embodiments, in response to receiving the edge instruction, a corresponding edge device is configured to change a sensor parameter for a sensor on the edge device, for example, in accordance with a sensor parameter in the edge instruction. In certain embodiments, in response to receiving the edge instruction, a corresponding edge device is configured to determine a sensor parameter for a sensor on the edge device, for example, using one or more models associated with the edge device.

In some embodiments, the processing device is configured to store the plurality of sets of edge data, the one or more object parameters, and/or operation parameters, to the processing memory 115. In certain embodiments, the processing device is configured to generate a processing instruction pertaining to a second processing device. In some embodiments, a processing instruction includes data from the processing memory or an access instruction to the processing memory. In certain embodiments, the processing instruction includes an indication of the device to be the second processing device. In some embodiments, the second processing device is an edge device (e.g., the edge device 105A, the edge device 105B). In certain embodiments, the second processing device is the user device 140. In some embodiments, the processing device is no longer available or suitable to be the processing device for a target object and/or a group of edge devices. In certain examples, the processing device moves to or will move to a location too far from the target object, for example, outside of a predetermined range of the location of the target object or outside the range of sensors reporting data to the processing device. In some examples, the processing device becomes unsuitable because of one or more operation environment constraints (e.g., communication bandwidth, power consumption, computing resource, etc.). In some examples, the processing device is lack of or becomes lack of communication bandwidth. In certain examples, the processing device is lack of or becomes lack of computing resources.

According to certain embodiments, the processing device is configured to transmit the processing instruction to the second processing device and at least a part of the plurality of edge devices. In some embodiments, the processing device is configured to provide access to the processing memory 115 to the second processing device. In certain embodiments, the processing device is configured to transmit data in the processing memory 115 to the second processing device. In some embodiments, the processing device is configured to provide access information (e.g., communication information, authentication information) for the processing memory to the second processing device. For example, one model gets a high-confidence inference using data from a sensor. As an example, the system delegates to a second device which may have a more expensive sensor and/or higher-resolution sensor to receive further confirmation. In some examples, if the confidence of the model inference using data from a sensor is low, the system may not send such data to other devices.

According to certain embodiments, the AIP (110A, 110B) is configured to change the one or more sensors (120A, 120B) coupled via the data API (112A, 112B) dynamically. According to certain embodiments, the AIP (110A, 110B) is configured to change the one or more sensors (120A, 120B) coupled via the data API (112A, 112B) in response to receiving the edge instruction. In certain examples, the AIP (110A, 110B) is configured to change the one or more sensors (120A, 120B) based upon a configuration (e.g., a system configuration, a user configuration) and/or an input (e.g., a user input, an input received via a software interface). In some examples, the AIP (110A, 110B) is configured to change the one or more sensors (120A, 120B) or add a coupled sensor automatically or dynamically, for example, based on a command (e.g., an edge instruction, a sensor command) received via a software interface.

According to some embodiments, the AIP (110A, 110B) is configured to interact with the corresponding sensor (120A, 120B) to send one or more command(s) to the sensor and control how the sensor captures the data. In some embodiments, the AIP is configured to interact with the sensor to send one or more command(s) to the sensor and control how the sensor captures the data based on one or more user inputs and/or inference configurations. In one example, the AIP system is looking at a target (e.g., a car) or looking for a target (e.g., a car with specific characteristics). In some examples, the AIP (110A, 110B) is configured to send a command to the sensor (120A, 120B), where the sensor command includes one or more command parameters. In certain examples, the sensor command is sent via the sensor API (111A, 111B). In some examples, the sensor command is compiled in complaint with the format of the sensor API (111A, 111B).

In some embodiments, the command parameters include one or more object parameters, one or more sensor parameters, one or more device parameters, and/or the like. In certain embodiments, the edge instruction uses the command parameters. In certain embodiments, the one or more sensor parameters include a type of sensor, a feature of sensor, a configuration of sensor, a sensing range, a sensing angle, and/or the like. In some examples, the sensor is an image sensor and the sensor parameters include a zooming parameter, a resolution parameter, a frame rate parameter, a gain parameter, a binning parameter, an image format parameter, and/or the like. In certain examples, the sensor includes an acoustic sensor, a transducer, an ultrasonic sensor, an infrared sensor, and/or the like. In certain embodiments, the one or more device parameters include a location parameter, a position parameter, a speed parameter, and/or the like. In some examples, the command includes a command to follow the target, for example, a command of an edge device following movements of the target.

According to certain embodiments, the AIP (110A, 110B) is configured to receive one or more model inferences from the one or more models (130A, 130B) via the inference API. In certain embodiments, the one or more model inferences include an identified target object and/or a target area. In some embodiments, the AIP (110A, 110B) is configured to generate the sensor command based on the one or more model inferences. In certain embodiments, the AIP (110A, 110B) is configured to send the sensor command to the sensor (120A, 120B) via the sensor API (111A, 111B).

According to some embodiments, the AIP (110A, 110B) is configured to transmit the one or more model inferences to the one or more user devices 140, for example, via the open API (116A, 116B). In certain embodiments, the user device 140 presents the model inferences to a user. In some embodiments, the user provides a user input via the user device. In some embodiments, the user input includes an identification of the target object. In certain embodiments, the user input includes an identification of the target area, for example, the target area associated with the target object. In some embodiments, the AIP (110A, 110B) is configured to receive the user input from the user device 140, for example, via the open API (116A, 116B). In certain embodiments, the AIP (110A, 110B) is configured to generate the sensor command based on the user input. In some embodiments, the AIP (110A, 110B) is configured to generate the sensor command based on the one or more model inferences and the user input. In certain embodiments, the AIP (110A, 110B) is configured to send the sensor command to the sensor (120A, 120B) via the sensor API (111A, 111B).

According to some embodiments, the AIP controller 118 can be used to configure, control, and/or manage the one or more AIPs (110A, 110B), including managing components to be coupled to the one or more AIPs (110A, 110B). In certain examples, the AIP controller 118 is configured to send a request to the AIP (110A, 110B) to make changes to the one or more sensors (120A, 120B) and/or make changes to the one or more models (130A, 130B). In certain embodiments, at least one of the one or more user devices 140 includes an AIP controller 118. In some embodiments, at least one of the one or more edge devices 105 includes an AIP controller 118. In some examples, the AIP controller 118 includes a user interface (e.g., a graphical user interface). In certain examples, the AIP controller 118 allows a user to select one or more algorithms to be added to a model (130A, 130B), for example, via the model controller and/or the container infrastructure. In some examples, the AIP controller 118 allows a user to select one or more algorithms to be updated to a model (130A, 130B), for example, via the model controller and/or the container infrastructure.

According to certain embodiments, the AIP controller 118 allows a user to select to deploy a new or updated model (130A, 130B) to the AIP (110A, 110B). In some embodiments, the AIP controller 118 allows a user to select to deploy a new or updated model (130A, 130B) to the AIP (110A, 110B), for example, via the model controller and/or the container infrastructure. In some examples, the AIP controller 118 allows a user to configure a processing pipeline (e.g., order, schedule, latency, etc.) for using one or more models, one or more processors, and/or one or more edge devices. In some embodiments, the AIP controller 118 is configured to use a message (e.g., a low bandwidth message) to the AIP (110A, 110B). In certain examples, in response to receiving the message, the AIP (110A, 110B) updates the one or more models for deployment, for example, by loading the one or more models for a same hosting device or a local device (e.g., a computing device close by, a computing device connected by wire).

According to some embodiments, the AIP (110A, 110B), the one or more sensors 120, and the one or more models (130A, 130B) are disposed in an edge device 105. For example, the edge device 105 is a satellite, and the sensor 120 is an orbiting sensor. As an example, an edge device is an aircraft, a submarine, and/or a vehicle. As an example, an edge device includes one or more sensors in the air, in the space, under the sea, in the water, on the land, and/or at other locations. In certain examples, an edge device is a physical device including one or more sensors, an AIP, an AIP controller and/or one or more model(s). In some examples, the one or more models (130A, 130B) is configured to generate an insight based on the processed sensor data. In certain examples, the open API (116A, 116B) is configured to couple to the user device 140. In some examples, the AIP (110A, 110B) is configured to transmit collected sensor data, processed sensor data, and/or the insight to the user device 140. In certain examples, the open API (116A, 116B) is configured to broadcast to a network.

According to certain embodiments, the AIP operation environment 100 includes one or more edge devices 105, one or more user devices 140, and/or one or more model repositories 160, each or in combination, may include or have access to one or more memory repositories (e.g., data repositories, application repositories). In some embodiments, the data repository(s) (not shown) can include sensor data, processed sensor data, model data, model inferences, edge instructions, model configuration data, AIP configuration, and/or the like. The data repository and/or the application repository may be implemented using any one of the configurations described below. A data repository may include random access memories, flat files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In some cases, various components in the AIP operation environment 100 can execute software or firmware stored in non-transitory computer-readable medium (e.g., application repository) to implement various processing steps. Various components and processors of the operation software environment 100 can be implemented by one or more computing devices, including but not limited to, circuits, a computer, a cloud-based processing unit, a processor, a processing unit, a microprocessor, a mobile computing device, and/or a tablet computer. In some cases, various components of the operation software environment 100 (e.g., the one or more edge devices 105A, 105B, the one or more user devices 140, etc.) can be implemented on a shared computing device. Alternatively, a component of the AIP operation environment 100 can be implemented on multiple computing devices. In some implementations, various modules and components of the operation software environment 100 can be implemented as software, hardware, firmware, or a combination thereof. In some cases, various components of the AIP operation environment 100 can be implemented in software or firmware executed by a computing device.

Various components of the AIP operation environment 100 can communicate via or be coupled to via a communication interface, for example, a wired or wireless interface. The communication interface includes, but not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

As discussed above and further emphasized here, FIG. 1 is merely an example. One of ordinary skill in the art would recognize many variations, alternatives, and modifications. For example, a sensor (120A, 120B) is replaced by a sub-system that includes one or more components that are not sensors. As an example, a computing model is a micro-model.

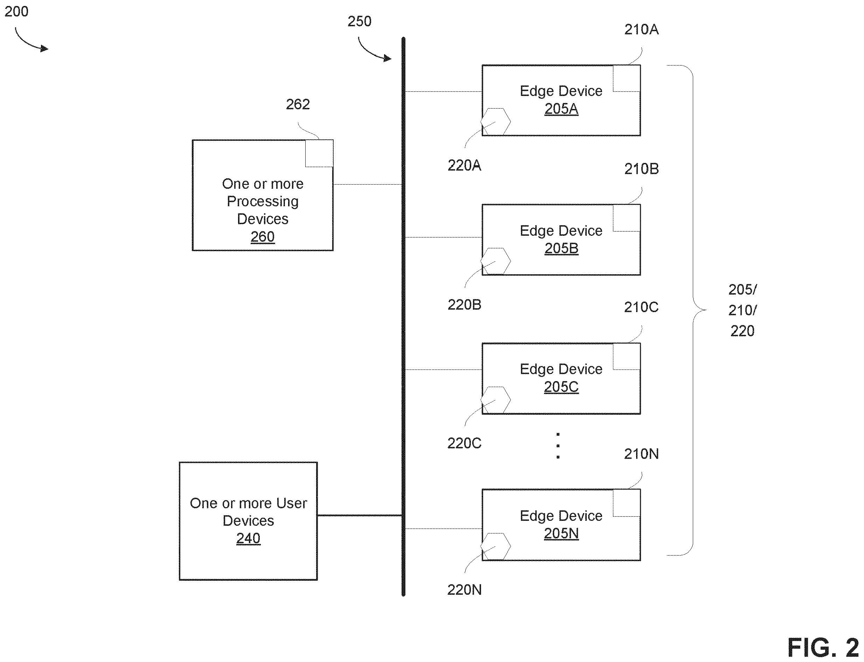

FIG. 2 illustrates an AIP system 200 and/or an AIP operation environment according to some embodiments of the present disclosure. FIG. 2 is merely an example. One of ordinary skill in the art would recognize many variations, alternatives, and modifications. According to certain embodiments, the AIP system 200 includes one or more edge devices 205, one or more user devices 240, a communication network 250, and one or more processing devices 260. Although the above has been shown using a selected group of components for the AIP system 200, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present specification.

According to some embodiments, the one or more edge devices 205 include an edge device 205A, an edge device 205B, an edge device 205C, ... and an edge device 205N. For example, an edge device 205 may include an AIP, one or more sensors, one or more models, and/or an AIP controller. Each of the one or more edge devices 205 (e.g., 205A, 205B, 205C, . . ., 205N) may use one or more embodiments of the one or more edge devices 105 described associated with FIG. 1. In certain embodiments, each of the edge device 205 includes an AIP 210 (e.g., 210A, 210B, 210C, ..., 210N) and one or more sensors 220 (e.g., 220A, 220B, 220C, ..., 220N). Each of the one or more user devices 240 may use one or more embodiments of the one or more user devices 140 described associated with FIG. 1. As an example, a user device 240 may include an AIP controller.

According to certain embodiments, the AIP system 200 uses one or more networks 250 for communications among the one or more edge devices 205, one or more processing devices 260, and the one or more user devices 240. In some examples, the one or more networks 250 include a broadcasting network. In certain examples, at least a part of the one or more edge devices 205, the one or more processing device 260, and the one or more user devices 240 can receive communication messages (e.g., sensor data, edge data, edge instructions, processing instructions) via the network 250. In certain embodiments, the network 250 includes a lightweight communication channel that has low bandwidth. In some embodiments, the network 250 includes a medium-speed communication channel that has medium bandwidth. In certain embodiments, the network 250 includes a high-speed communication channel that has high bandwidth. In some embodiments, the AIP system 200 may dynamically adjust communication channels and/or the calibration threshold (e.g., a communication bandwidth threshold), for example, depending on the available channels, the dynamically adjust the calibration threshold. In certain embodiments, the AIP system 200 may select a low-bandwidth channel. In some embodiment, the AIP system 200 may select a low-bandwidth channel based on availability. In the AIP system designates a channel (e.g., a high-bandwidth channel, a low-bandwidth channel) as a part of the broadcasting network. In some embodiments, a high bandwidth channel is saturated or suffering from interference due to an attack, such that a low-bandwidth channel is selected.

According to some embodiments, the processing device 260 is configured to receive a plurality of sets of edge data from a plurality of edge devices 205 respectively. In certain embodiments, the processing device 260 is an edge device (e.g., edge device 205A). In some embodiments, the processing device 260 is a user device 240. In some embodiments, the processing device 260 receives edge data from three or more edge devices. In certain embodiments, the processing device 260 includes an AIP 262. In some embodiments, the processing device 260 is configured to receive the plurality of sets of edge data via the AIP 262. According to certain embodiments, the edge data can include different data characteristics from different edge devices. In some embodiments, the edge data can be raw sensor data (e.g., a stream of video, raw image data, etc.). In certain embodiments, the edge data can be processed sensor data, for example, filtered sensor data, and/or compressed sensor data. In some embodiments, the edge data can be processed sensor data, for example, the processed sensor data can include model inferences and/or parameters of one or more detected objects. In certain embodiments, an edge device 205 is configured to transmit raw sensor data via a high-speed communication channel of the network 250. In some embodiments, an edge device 205 is configured to transmit processed sensor data via a medium-speed communication channel of the network 250. In certain embodiments, an edge device 205 is configured to transmit model inferences via a lightweight communication channel of the network 250.

According to certain embodiments, an edge device can filter processed sensor data to reduce bandwidth usage based on data criteria such as detection confidence, priority of a given class of detected objects, and/or other criteria. In some embodiments, an edge device can process the data further to make data fit for transmission over a given channel, for example, the data may be compressed, filtered and/or transmitted in batches, which may be ordered by user defined priority, configuration defined priority or some other metric.

According to some embodiments, the processing device 260 is configured to analyze the plurality of sets of edge data using one or more computing models (e.g., the one or more computing models 130A, 130B in FIG. 1). In certain embodiments, the processing device 260 is configured to determine at least two sets of edge data indicating a detection of a target object by corresponding edge device, for examples, based upon one or more object parameters. In certain embodiments, the one or more object parameters include at least one selected from a group consisting of a location parameter, a temporal parameter, a speed parameter, an object type parameter, a size parameter, a shape parameter, a color parameter, an object image parameter, a confidence parameter, and an electronic signature. In some embodiments, an electronic signature includes an object type parameter, a size parameter, a shape parameter, a color parameter, an object image parameter, and a combination thereof.

In certain embodiments, in response to a target object being detected, the processing device is configured to determine an operation parameter of the edge device 205 (e.g., 205A, 205B, 205C, ..., 205N) and generate an edge instruction based upon the determined operation parameter, the plurality of sets of edge data. In some embodiments, the processing device 260 transmits the edge instruction to the edge device 205, for example, via the AIP 262.

According to certain embodiments, an edge instruction includes a sensor command and/or an edge command. In some embodiments, the sensor command includes one or more sensor parameters (e.g., a detection angle, a detection range, an optical sensor zoom, a sensor resolution, etc.). In certain embodiments, the edge command includes one or more edge device parameters (e.g., an edge device location, an edge device speed, an edge device direction, an edge device height, etc.). In some embodiments, in response to receiving the edge instruction, a corresponding edge device 205 is configured to change a sensor parameter for a sensor 220 on the edge device 205, for example, in accordance with a sensor parameter in the edge instruction. In certain embodiments, in response to receiving the edge instruction, a corresponding edge device is configured to determine a sensor parameter for a sensor on the edge device, for example, using one or more models associated with the edge device.

In some embodiments, the processing device 260 is configured to store the plurality of sets of edge data, the one or more object parameters, and/or operation parameters, to a processing memory (e.g., a data cache, a data repository). In certain embodiments, the processing device 260 is configured to generate a processing instruction pertaining to a second processing device. In some embodiments, the second processing device is another edge device or user device, different from the processing device 260. In certain embodiments, the second processing device is selected based upon the communication bandwidth and/or the resource availability. In some embodiments, the processing device 260 is no longer available or suitable to be the processing device for a target object and/or a group of edge devices. In certain examples, the processing device is moved to or will be moved to a location too far from the target object, for example, outside of a predetermined range of the location of the target object. In some examples, the processing device 260 becomes unsuitable because of one or more operation environment constraints (e.g., communication bandwidth, power consumption, computing resource, etc.). In some examples, the processing device 260 is lack of or becomes lack of communication bandwidth. In certain examples, the processing device is lack of or becomes lack of computing resources.

According to certain embodiments, the processing device 260 is configured to transmit the processing instruction to the second processing device and at least a part of the plurality of edge devices. In some embodiments, the processing device 260 is configured to provide access to the processing memory to the second processing device. In certain embodiments, the processing device 260 is configured to transmit data in the processing memory to the second processing device. In some embodiments, the processing device 260 is configured to provide access information (e.g., communication information, authentication information) for the processing memory to the second processing device.

According to certain embodiments, the AIP operation environment 200 includes one or more edge devices 205, one or more user devices 240, and/or one or more processing devices 260, each or in combination, may include or have access to one or more memory repositories (e.g., data repositories, application repositories). In some embodiments, the data repository(s) (not shown) can include sensor data, processed sensor data, model data, model inferences, edge instructions, model configuration data, AIP configuration, and/or the like. The data repository and/or the application repository may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In some cases, various components in the AIP operation environment 200 can execute software or firmware stored in non-transitory computer-readable medium (e.g., application repository) to implement various processing steps. Various components and processors of the operation software environment 200 can be implemented by one or more computing devices, including but not limited to, circuits, a computer, a cloud-based processing unit, a processor, a processing unit, a microprocessor, a mobile computing device, and/or a tablet computer. In some cases, various components of the operation software environment 200 (e.g., the one or more edge devices 205, the one or more user devices 240, the one or more processing devices 260, etc.) can be implemented on a shared computing device. Alternatively, a component of the AIP operation environment 200 can be implemented on multiple computing devices. In some implementations, various modules and components of the operation software environment 200 can be implemented as software, hardware, firmware, or a combination thereof. In some cases, various components of the AIP operation environment 200 can be implemented in software or firmware executed by a computing device.

Various components of the AIP operation environment 200 can communicate via or be coupled to via a communication interface, for example, a wired or wireless interface. The communication interface includes, but not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

As discussed above and further emphasized here, FIG. 2 is merely an example. One of ordinary skill in the art would recognize many variations, alternatives, and modifications. For example, a sensor 220 is replaced by a sub-system that includes one or more components that are not sensors.

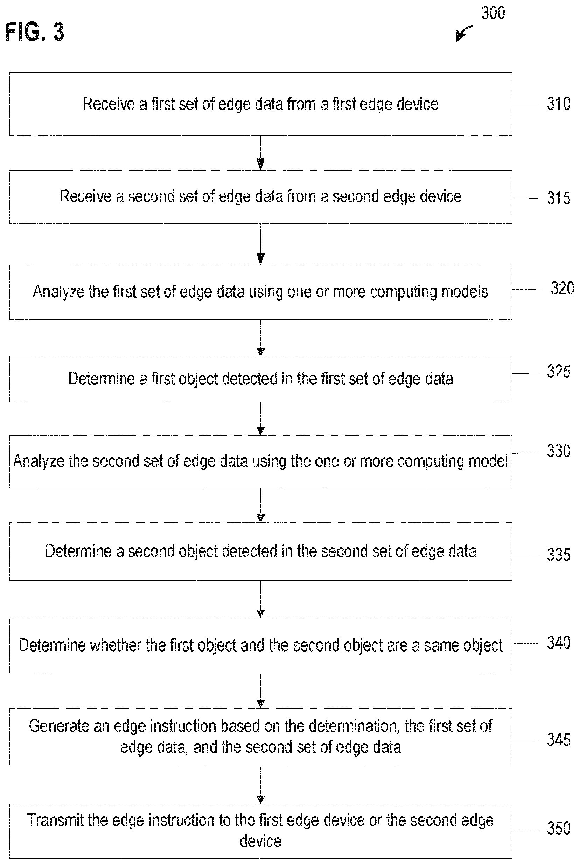

FIG. 3 is a simplified diagram showing a method 300 for AIP sensor correlations according to certain embodiments of the present disclosure. This diagram is merely an example. One of ordinary skill in the art would recognize many variations, alternatives, and modifications. The method 300 for designing an application with action logs includes processes 310, 315, 320, 325, 330, 335, 340, 345, and 350. Although the above has been shown using a selected group of processes for the method 300 for AIP sensor correlations, there can be many alternatives, modifications, and variations. For example, some of the processes may be expanded and/or combined. Other processes may be inserted to those noted above. Depending upon the embodiment, the sequence of processes may be interchanged with others replaced. Further details of these processes are found throughout the present disclosure.

In some embodiments, some or all processes (e.g., steps) of the method 100 are performed by a system (e.g., the computing system 600). In certain examples, some or all processes (e.g., steps) of the method 100 are performed by a computer and/or a processor directed by a code. For example, a computer includes a server computer and/or a client computer (e.g., a personal computer). In some examples, some or all processes (e.g., steps) of the method 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at the process 310, the AIP system (e.g., an AIP system in the environment 100 in FIG. 1, an AIP system in the environment 200 in FIG. 2) and/or a processing device, for example, an device including an AIP (e.g., the AIP 110 in FIG. 1, the AIP 210 in FIG. 2), is configured to receive a first set of edge data from a first edge device (e.g., the edge device 105A in FIG. 1, the edge device 205A in FIG. 2). In some embodiments, the processing device can be an edge device (e.g., one of the edge devices 205 in FIG. 2) and/or a computing device (e.g., one of the one or more user devices 240 in FIG. 2). In certain embodiments, at the process 315, the AIP system and/or the processing device are configured to receive a second set of edge data from a second edge device (e.g., the edge device 105B in FIG. 1, the edge device 205B in FIG. 2), where the second edge device is different from the first edge device. In some embodiments, the processing device includes an AIP for communication with other devices in the system. In certain embodiments, the processing device is an edge device. In some embodiments, the processing device receives edge data from three or more edge devices.

According to certain embodiments, the edge data can be of data characteristics from different edge devices. In some embodiments, the edge data can be raw sensor data (e.g., a stream of video, raw image data, etc.). In certain embodiments, the edge data can be processed sensor data, for example, filtered sensor data, and/or compressed sensor data. In some embodiments, the edge data can be processed sensor data, for example, the processed sensor data including parameters of one or more detected objects. In certain embodiments, the one or more object parameters include at least one selected from a group consisting of a location parameter, a temporal parameter, a speed parameter, an object type parameter, a size parameter, a shape parameter, an object image parameter, and an electronic signature.

According to some embodiments, at the process 320, the processing device is configured to analyze the first set of edge data using one or more computing models (e.g., the one or more computing models 130A, 130B in FIG. 1); and at the process 325, the processing device is configured to determine a first object detected in the first set of edge data based upon the analysis. According to certain embodiments, at the process 330, the processing device is configured to analyze the second set of edge data using the one or more computing models; and at the process 335, the processing device is configured to determine a second object detected in the second set of edge data.

In some embodiments, the processing device may transform the received data (e.g., raw data, raw image, edge data) into a respective format depending on the device the data originated from and/or the models configured to receive the transformed data. In certain examples, the processing device may generate first transformed data in a first format for data from a first edge device and second transformed data in a second format for data from a second edge device different from the first edge device. In some examples, the processing device may generate first transformed data in a first format for data for a first model and second transformed data in a second format for data from a second model different from the first model. In certain embodiments, these transformations may be carried out by one or more models connected to (e.g., via a software interface, running on a different device, etc.) or integrated with the device. In some embodiments, the processing device may select data to be transmitted from the raw data, the first transformed data, the second transformed data, and a combination thereof.

In some embodiments, at the process 340, the processing device is configured to determine whether the first object and the second object are a same object based upon one or more object parameters including, for example, a location parameter, a temporal parameter, a speed parameter, an object type parameter, a size parameter, a shape parameter, an object image parameter, and an electronic signature. In certain embodiments, at the process 345, the processing device is configured to generate an edge instruction based on the determination, the first set of edge data, and the second set of edge data; and at the process 350, the processing device is configured to transmit the edge instruction to the first edge device or the second edge device. In some embodiments, in response to the first object and the second object being determined to the same object, the processing device is configured to generate an edge instruction based upon the determined second object, the first set of edge data, and the second set of edge data; and transmitting the edge instruction to the second edge device. In some embodiments, in response to the first object and the second object being determined to the same object, the processing device is configured to determine an operation parameter of the second edge device and generate an edge instruction based upon the determined operation parameter, the first set of edge data, and the second set of edge data; and transmitting the edge instruction to the second edge device.

In certain embodiments, in response to the first object and the second object being determined to the same object, the processing device is configured to generate a calibration based on the first edge data, the second set of edge data, and the determined same object. In some embodiments, the calibration includes, for example, a calibration function, one or more calibration parameters, and/or the like. In certain embodiments, the processing device is configured to apply the calibration to the first set of edge data and/or the second set of edge data. In some embodiments, the processing device is configured to provide the calibration to a third edge device (e.g., different from the first edge device, different from the second edge device) to cause the calibration to be applied to a third set of edge data collected by the third edge device (e.g., data collected by sensors associated with the third edge device).

According to certain embodiments, an edge instruction includes a sensor command and/or an edge command. In some embodiments, the sensor command includes one or more sensor parameters (e.g., a detection angle, a detection range, an optical sensor zoom, a sensor resolution, etc.). In certain embodiments, the edge command includes one or more edge device parameters (e.g., an edge device location, an edge device speed, an edge device direction, an edge device height, etc.). In some embodiments, in response to receiving the edge instruction, a corresponding edge device is configured to change a sensor parameter for a sensor on the edge device, for example, in accordance with a sensor parameter in the edge instruction. In certain embodiments, in response to receiving the edge instruction, a corresponding edge device is configured to determine a sensor parameter for a sensor on the edge device, for example, using one or more models associated with the edge device.

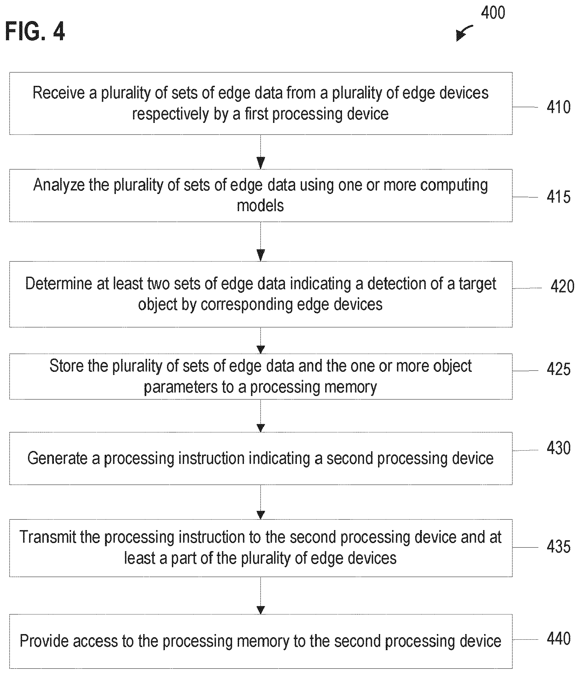

FIG. 4 is a simplified diagram showing a method 400 for AIP sensor correlations according to certain embodiments of the present disclosure. This diagram is merely an example. One of ordinary skill in the art would recognize many variations, alternatives, and modifications. The method 400 for designing an application with action logs includes processes 410, 415, 420, 425, 430, 435, and 440. Although the above has been shown using a selected group of processes for the method 400 for AIP sensor correlations, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 400 are performed by a system (e.g., the computing system 600). In certain examples, some or all processes (e.g., steps) of the method 400 are performed by a computer and/or a processor directed by a code. For example, a computer includes a server computer and/or a client computer (e.g., a personal computer). In some examples, some or all processes (e.g., steps) of the method 400 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at the process 410, a first processing device (e.g., the user device 140 in FIG. 1, the first edge device 105A in FIG. 1, the second edge device 105B in FIG. 1) is configured to receive a plurality of sets of edge data from a plurality of edge devices respectively. In some embodiments, the processing device receives edge data from three or more edge devices. According to certain embodiments, the edge data can be of data characteristics from different edge devices. In some embodiments, the edge data can be raw sensor data (e.g., a stream of video, raw image data, etc.). In certain embodiments, the edge data can be processed sensor data, for example, filtered sensor data, and/or compressed sensor data. In some embodiments, the edge data can be processed sensor data, for example, the processed sensor data including parameters of one or more detected objects.

According to some embodiments, at the process 415, the processing device is configured to analyze the plurality of sets of edge data using one or more computing models (e.g., the one or more computing models 130A, 130B in FIG. 1); and at the process 420, the processing device is configured to determine at least two sets of edge data indicating a detection of a target object by corresponding edge device, for examples, based upon one or more object parameters. In certain embodiments, the one or more object parameters include at least one selected from a group consisting of a location parameter, a temporal parameter, a speed parameter, a shape parameter, and an object image parameter.

In some embodiments, at the process 425, the processing device is configured to store the plurality of sets of edge data, the one or more object parameters, and/or operation parameters, to a processing memory (e.g., a data cache, a data repository). In certain embodiments, at the process 430, the processing device is configured to generate a processing instruction pertaining to a second processing device. In some embodiments, the processing device is no longer available or suitable to be the processing device for a target object and/or a group of edge devices. In certain examples, the processing device is moved to or will be moved to a location too far from the target object, for example, outside of a predetermined range of the location of the target object. In some examples, the processing device becomes unsuitable because of one or more operation environment constraints (e.g., communication bandwidth, power consumption, computing resource, etc.). In some examples, the processing device is lack of or becomes lack of communication bandwidth. In certain examples, the processing device is lack of or becomes lack of computing resources.

According to certain embodiments, at the process 435, the processing device is configured to transmit the processing instruction to the second processing device and at least a part of the plurality of edge devices. In some embodiments, at the process 440, the processing device is configured to provide access to the processing memory to the second processing device. In certain embodiments, the processing device is configured to transmit data in the processing memory to the second processing device. In some embodiments, the processing device is configured to provide access information (e.g., communication information, authentication information) for the processing memory to the second processing device.

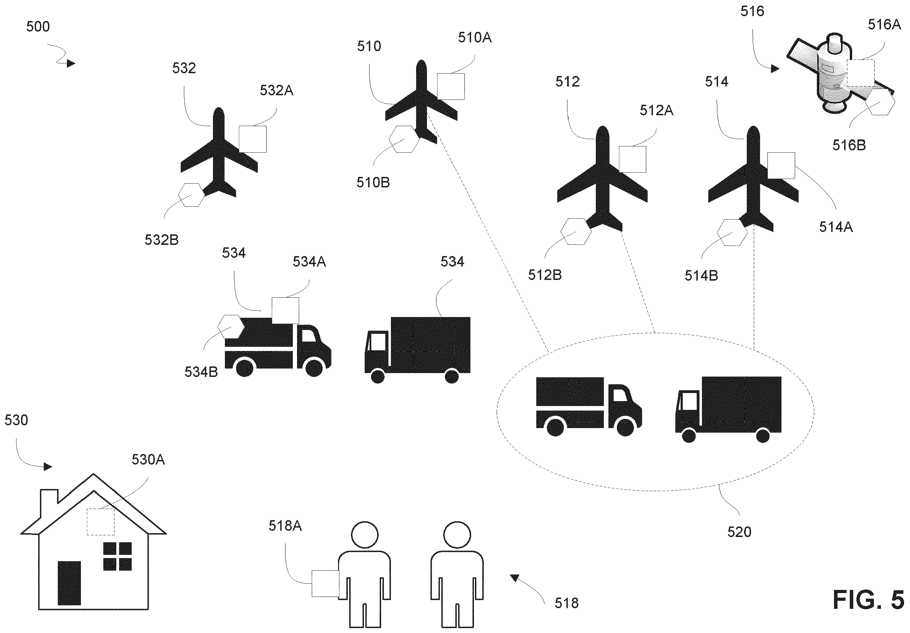

According to some embodiments, an example implementation of an operation environment 500 for AIP is illustrated in FIG. 5. FIG. 5 is merely an example. One of ordinary skill in the art would recognize many variations, alternatives, and modifications. In one example, an aircraft 510, for example, on the other side of the mountain, detects (e.g., sees) one or more targets 520 and the aircraft 510 is configured to relay the detection back to a base device 530A in a base station 530 and/or one or more other edge devices (e.g., an aircraft 512, an aircraft 514, a satellite 516, one or more devices 518 (e.g., the user device 140 in FIG. 1, the user device 240 in FIG. 2) associated with one or more persons, an aircraft 532, one or more vehicles 534). In certain embodiments, each of the edge devices 510, 512, 514, 516, 532, 534 includes a corresponding AIP 510A, 512A, 514A, 516A, 532A, 534A, and corresponding one or more sensors 510B, 512B, 514B, 516B, 532B, 534B. In certain embodiments, each edge device includes an AIP (e.g., the AIP 110 in FIG. 1, the AIP 210 in FIG. 2). In some embodiments, at least some of the edge devices include an AIP. In certain embodiments, at least one of the edge devices does not include an AIP.

In some embodiments, while an edge device (e.g., the aircraft 512) is collecting sensor data regarding a target (e.g., target 520), the device may directly initiate, and/or coordinate with another edge device (e.g., the aircraft 514) to collect sensor data regarding the same target (e.g., target 520). In certain embodiments, the first edge device 510 is a processing device configured to receive edge data from one or more of a second edge device 512, a third edge device 514, or a fourth edge device 516. In some examples, the first edge device 510 may determine the second edge device 514 has detected or can detect the target object 520. In one example, the first edge device 510 may compile a first edge instruction to cause or change how the second edge device 512 collects sensor data regarding the target object 520, for example, collecting images and/or videos from a different angle to see whether the target 520 is a certain type of object of interest. By generating a first edge instruction based on determining that objects detected by first and second edge devices are the same object, the first and second edge devices can coordinate their operation to advantageously combine data obtained by both of the first and second edge devices. The first and second edge devices may have different capabilities (i.e. different inherent capabilities) or may obtain different sensor data based on how they are being used (for example, based on the different positions or orientations of the first and second edge devices). By coordinating the operation of the first and second edge devices, data collection may be improved in comparison with using the first and second edge devices independently.

According to certain embodiments, an edge instruction includes a sensor command and/or an edge command. In some embodiments, the edge instruction is sent from the edge device 510 via the AIP 510A and received by the edge device 512 via the AIP 512A. In some embodiments, the sensor command includes one or more sensor parameters (e.g., a detection angle, a detection range, an optical sensor zoom, a sensor resolution, etc.). In certain embodiments, the edge command includes one or more edge device parameters (e.g., an edge device location, an edge device speed, an edge device direction, an edge device height, etc.). In some embodiments, in response to receiving the edge instruction, the second edge device 512 is configured to change a sensor parameter for a sensor 512B on the edge device 512, for example, in accordance with a sensor parameter in the edge instruction. In certain embodiments, in response to receiving the edge instruction, the edge device 512 is configured to determine a sensor parameter for a sensor 512B on the edge device 512, for example, using one or more models associated with the edge device.

In some embodiments, the edge device 510 receives a set of edge data from the edge device 514 via the AIP 510A and determines that the edge device 514 is detecting or can detect the target object 520, for example, via one or more computing models coupled to the AIP 510A. In certain embodiments, the edge device 510 is configured to generate and send a second edge instruction to the edge device 514, to be received by the edge device 514 via the AIP 514A. In some embodiments, in response to receiving the second edge instruction, the edge device 514 is configured to adjust one or more sensors 514B in relation to the target object 520. For example, the edge device 514 is configured to determine an area that the target object 520 is at and an electronic signature of the target object 520, then send one or more sensor commands to the one or more sensors 514B to scan the area and determine data related to the target object (e.g., model inferences) using one or more computing models, for example, based upon the received electronic signature of the target object 520. In some embodiments, the edge device 514 is configured to exclude one or more objects detected in the area that are not the target object 520 using the electronic signature.

In some embodiments, the determination of the same target is done using location (e.g., space) and time information using one or more algorithms (e.g., one or more naive algorithms). In certain embodiments, the AIP system can make a determination of the same target using one or more sensor data (e.g., image data) and one or more models (e.g., computer vision models/algorithms). In one example, a computer vision algorithm running on an edge device can determine that this is a same target from one or more different angles collected from one or more edge devices.

According to certain embodiments, the edge device 510 is moving away from the target object 520. In some embodiments, the edge device 510 is configured to identify another edge device (e.g., edge device 520) to be a subsequent processing device. In certain embodiments, the base station 530 is configured to identify another edge device to be a subsequent processing device and provide the information to the edge device 510. In some embodiments, the edge device 510 is configured to compile a processing instruction and send the processing instruction to the subsequent processing device and/or other related edge devices. In one example, the subsequent processing device is the edge device 512 and other related edge devices are edge device 514 and edge device 516. In certain embodiments, the edge device 512 receives the processing instruction and starts to collect edge data from other edge devices.

In certain embodiments, two or more edge devices are configured to collect sensor data and confirm, for example, by one of the two or more edge devices or another control device, that the collected sensor data from the two or more edge devices are associated with the same target. In some examples, the collected sensor data from the two or more edge devices are associated with the same target from different angles. In some embodiments, a first edge device 510 provides the location information of the target and one or more other edge devices (e.g., the edge device 516) will collect sensor data of the target based on the location information. In one example, the second edge device (e.g., the edge device 516) may identify the target to be an object of interest (e.g., a newer vehicle), and the second edge device via the AIP and/or one or more other AIPs in the AIP system incorporating one or more AIPs is configured to direct a third edge device (e.g., the edge device 514) to collect sensor data regarding the target.

According to some embodiments, the AIP (e.g., 510A, 512A, 514A, 516A, 532A, 534A) is configured to interact with the corresponding sensor (e.g., 510B, 512B, 514B, 516B, 532B, 534B) to send one or more command(s) to the sensor and control how the sensor captures the data. In some embodiments, the AIP is configured to interact with the sensor to send one or more command(s) to the sensor and control how the sensor captures the data based on one or more user inputs and/or inference configurations. In one example, the AIP system is looking at a target (e.g., a car) or looking for a target (e.g., a car with specific characteristics). In some examples, the AIP 510A is configured to send a command to the sensor 120, where the sensor command includes one or more command parameters. In certain examples, the sensor command is sent via the sensor API (e.g., the sensor API 111A or 11 1B in FIG. 1).

In some embodiments, the command parameters include one or more object parameters, one or more sensor parameters, one or more device parameters, and/or the like. In certain embodiments, the one or more sensor parameters include a type of sensor, a feature of sensor, a configuration of sensor, a sensing range, a sensing angle, and/or the like. In some examples, the sensor is an image sensor and the sensor parameters include a zooming parameter, a resolution parameter, a frame rate parameter, a gain parameter, a binning parameter, an image format parameter, and/or the like. In certain examples, the sensor includes an acoustic sensor, a transducer, an ultrasonic sensor, an infrared sensor, and/or the like. In certain embodiments, the one or more device parameters include a location parameter, a position parameter, a speed parameter, and/or the like. In some examples, the command includes a command to follow the target, for example, a command for a sensor to follow movements of the target.

According to certain embodiments, the AIP system is configured to use sensor correlation to improve the performance of the sensor, for example, to collect more relevant data from the sensor. In some embodiments, the AIP system is configured to improve the model, for example, by changing the model parameter or replacing the model, to improve the performance of the sensor. In certain embodiments, a set of sensor data along with identified objects can also be used for sensor calibration. In some embodiments, For example, if two or more processing devices along with their associated sensors achieve consensus on what the target object is, then other processing devices and/or the associated sensors may be calibrated to yield similar measurements. For example, consider two moving edge devices A and B with known speeds (e.g., speeds measured by sensors, speeds determined by sensor data) and both have sensors to determine their speed and both edge devices A and B also have sensors (e.g., cameras) and models that can be used to determine the speed of a target object in the sensor data. As an example, if the edge devices A and B can achieve consensus on the speed of the target object, the speed of the target object can be used for calibration by another edge device C (e.g., a processing device C with a known faulty speed sensor).

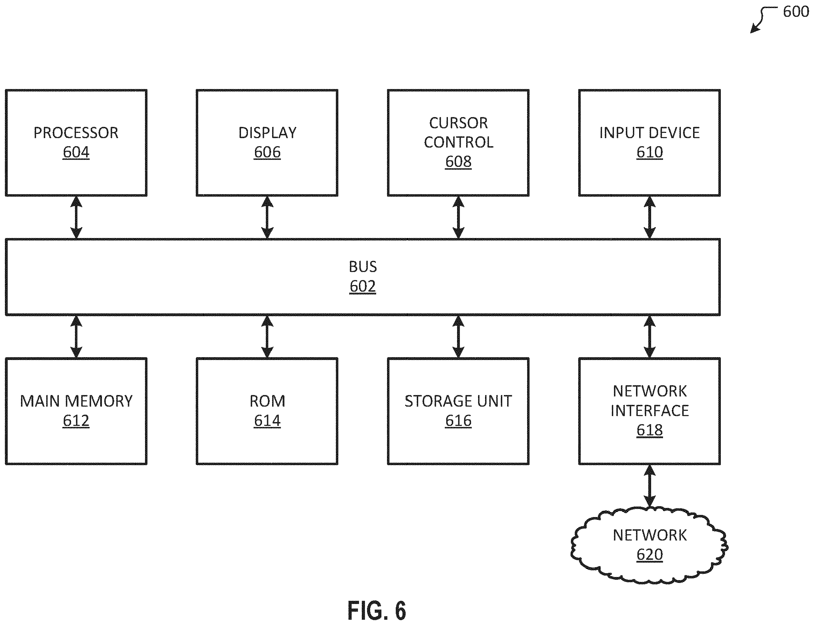

FIG. 6 is a simplified diagram showing a computing system for implementing a system 600 for sensor correlations in accordance with at least one example set forth in the disclosure. This diagram is merely an example, which should not unduly limit the scope of the claims. One of ordinary skill in the art would recognize many variations, alternatives, and modifications.

The computing system 600 includes a bus 602 or other communication mechanism for communicating information, a processor 604, a display 606, a cursor control component 608, an input device 610, a main memory 612, a read only memory (ROM) 614, a storage unit 616, and a network interface 618. In some embodiments, some or all processes (e.g., steps) of the methods 300, and/or 400 are performed by the computing system 600. In some examples, the bus 602 is coupled to the processor 604, the display 606, the cursor control component 608, the input device 610, the main memory 612, the read only memory (ROM) 614, the storage unit 616, and/or the network interface 618. In certain examples, the network interface is coupled to a network 620. For example, the processor 604 includes one or more general purpose microprocessors. In some examples, the main memory 612 (e.g., random access memory (RAM), cache and/or other dynamic storage devices) is configured to store information and instructions to be executed by the processor 604. In certain examples, the main memory 612 is configured to store temporary variables or other intermediate information during execution of instructions to be executed by processor 604. For examples, the instructions, when stored in the storage unit 616 accessible to processor 604, render the computing system 600 into a special-purpose machine that is customized to perform the operations specified in the instructions. In some examples, the ROM 614 is configured to store static information and instructions for the processor 604. In certain examples, the storage unit 616 (e.g., a magnetic disk, optical disk, or flash drive) is configured to store information and instructions.

In some embodiments, the display 606 (e.g., a cathode ray tube (CRT), an LCD display, or a touch screen) is configured to display information to a user of the computing system 600. In some examples, the input device 610 (e.g., alphanumeric and other keys) is configured to communicate information and commands to the processor 604. For example, the cursor control component 608 (e.g., a mouse, a trackball, or cursor direction keys) is configured to communicate additional information and commands (e.g., to control cursor movements on the display 606) to the processor 604.

According to some embodiments, a method for sensor correlation by a plurality of edge devices comprises: receiving a first set of edge data from a first edge device of the plurality of edge devices; receiving a second set of edge data from a second edge device of the plurality of edge devices, the second edge device being different from the first edge device; analyzing the first set of edge data using one or more computing models to determine a first object detected in the first set of edge data; analyzing the second set of edge data using the one or more computing models to determine a second object detected in the second set of edge data; and determining whether the first object and the second object are a same object based upon one or more object parameters; wherein the method is performed using one or more processors. For example, the method is implemented according to at least FIG. 1, FIG. 2, FIG. 3 and/or FIG. 4.

In some embodiments, the method further comprises generating an edge instruction based at least in part upon the determination of whether the first object and second object are a same object, the first set of edge data, and the second set of edge data; and transmitting the edge instruction to the second edge device. In certain embodiments, the method further comprises: in response to the first object and the second object being determined to the same object, generating an edge instruction based upon the determined second object, the first set of edge data, and the second set of edge data; and transmitting the edge instruction to the second edge device. In some embodiments, the second edge device is configured to change a sensor parameter in response to receiving the edge instruction. In certain embodiments, the one or more object parameters include at least one selected from a group consisting of a location parameter, a temporal parameter, a speed parameter, an object type parameter, a color parameter, a shape parameter, an object image parameter, a confidence parameter, and an electronic signature.

In certain embodiments, the method further comprises: receiving a third set of edge data from a third edge device, the third edge device being different from the first edge device, the third edge device being different from the second edge device; analyzing the third set of edge data to determine an operation parameter of the third edge device; generating a third edge instruction based at least in part upon the determined first object, the determined operation parameter, and the third set of edge data; and transmitting the third edge instruction to the third edge device. In some embodiments, the method further comprises: in response to the first object and the second object being determined to the same object, generating a calibration based on the first edge data, the second set of edge data, and the determined same object; and providing the calibration to a third edge device to cause the calibration to be applied to a third set of edge data collected by the third edge device, the third edge device being different from the first edge device, the third edge device being different from the second edge device.

In some embodiments, the method further comprises: storing the first set of edge data in a processing memory; storing the second set of edge data in the processing memory; and storing the one or more object parameters in the processing memory. In certain embodiments, the method further comprises: generating a first processing instruction, the first processing instruction includes an indication of a second computing device becoming a processing device, the second computing device being different from the first edge device, the fourth edge device being different from the second edge device; and transmitting the first processing instruction to the second edge device. In certain embodiments, the method further comprises: generating a first processing instruction, the first processing instruction includes an indication of a second computing device becoming a processing device, the second computing device being different from the first edge device; and transmitting the first processing instruction to the second edge device. In some embodiments, the method further comprises: providing access to the processing memory to the second computing device.

In certain embodiments, the first set of edge data includes a set of raw sensor data collected by a first sensor associated with the first edge device. In some embodiments, the second set of edge data includes a set of processed sensor data, wherein the set of processed sensor data is generated based on a second set of the sensor data collected by a second sensor associated with the second edge device; wherein the set of processed sensor data is smaller in size than the second set of the sensor data. In certain embodiments, the method further comprises: receiving a fifth set of edge data from a fifth edge device; where the fifth set of edge data includes a second set of processed data, where the second set of processed sensor data is generated based on a fifth set of the sensor data collected by a fifth sensor associated with the fifth edge device; where the second set of processed sensor data includes a set of object parameters associated with an object captured in the fifth set of the sensor data. In certain examples, the one or more computing models include a large language model (LLM).

According to certain embodiments, a system for sensor correlation by a plurality of edge devices comprises: one or more memories having instructions stored therein; and one or more processors configured to execute the instructions and perform operations comprising: receiving a first set of edge data from a first edge device of the plurality of edge devices; receiving a second set of edge data from a second edge device of the plurality of edge devices, the second edge device being different from the first edge device; analyzing the first set of edge data using one or more computing models to determine a first object detected in the first set of edge data; analyzing the second set of edge data using the one or more computing models to determine a second object detected in the second set of edge data; and determining whether the first object and the second object are a same object based upon one or more object parameters. For example, the system is implemented according to at least FIG. 1, FIG. 2, FIG. 3 and/or FIG. 4.

In some embodiments, the operations further comprise generating an edge instruction based at least in part upon the determination of whether the first object and second object are a same object, the first set of edge data, and the second set of edge data; and transmitting the edge instruction to the second edge device. In certain embodiments, the operations further comprise: in response to the first object and the second object being determined to the same object, generating an edge instruction based upon the determined second object, the first set of edge data, and the second set of edge data; and transmitting the edge instruction to the second edge device. In some embodiments, the second edge device is configured to change a sensor parameter in response to receiving the edge instruction. In certain embodiments, the one or more object parameters include at least one selected from a group consisting of a location parameter, a temporal parameter, a speed parameter, an object type parameter, a color parameter, a shape parameter, an object image parameter, a confidence parameter, and an electronic signature.

In certain embodiments, the operations further comprise: receiving a third set of edge data from a third edge device, the third edge device being different from the first edge device, the third edge device being different from the second edge device; analyzing the third set of edge data to determine an operation parameter of the third edge device; generating a third edge instruction based at least in part upon the determined first object, the determined operation parameter, and the third set of edge data; and transmitting the third edge instruction to the third edge device. In some embodiments, the operations further comprise: in response to the first object and the second object being determined to the same object, generating a calibration based on the first edge data, the second set of edge data, and the determined same object; and providing the calibration to a third edge device to cause the calibration to be applied to a third set of edge data collected by the third edge device, the third edge device being different from the first edge device, the third edge device being different from the second edge device.

In some embodiments, the operations further comprise: storing the first set of edge data in a processing memory; storing the second set of edge data in the processing memory; and storing the one or more object parameters in the processing memory. In certain embodiments, the operations further comprise: generating a first processing instruction, the first processing instruction includes an indication of a second computing device becoming a processing device, the second computing device being different from the first edge device, the fourth edge device being different from the second edge device; and transmitting the first processing instruction to the second edge device. In certain embodiments, the operations further comprise: generating a first processing instruction, the first processing instruction includes an indication of a second computing device becoming a processing device, the second computing device being different from the first edge device; and transmitting the first processing instruction to the second edge device. In some embodiments, the operations further comprise: providing access to the processing memory to the second computing device.

In certain embodiments, the first set of edge data includes a set of raw sensor data collected by a first sensor associated with the first edge device. In some embodiments, the second set of edge data includes a set of processed sensor data, wherein the set of processed sensor data is generated based on a second set of the sensor data collected by a second sensor associated with the second edge device; wherein the set of processed sensor data is smaller in size than the second set of the sensor data. In certain embodiments, the operations further comprise: receiving a fifth set of edge data from a fifth edge device; where the fifth set of edge data includes a second set of processed data, where the second set of processed sensor data is generated based on a fifth set of the sensor data collected by a fifth sensor associated with the fifth edge device; where the second set of processed sensor data includes a set of object parameters associated with an object captured in the fifth set of the sensor data. In certain examples, the one or more computing models include a large language model (LLM). According to some embodiments, a method for sensor correlation by a plurality of edge devices comprises: receiving a first set of edge data from a first edge device of the plurality of edge devices; receiving a second set of edge data from a second edge device of the plurality of edge devices, the second edge device being different from the first edge device; analyzing the first set of edge data using one or more computing models to determine a first object detected in the first set of edge data and a first confidence parameter associated with the first object; analyzing the second set of edge data using the one or more computing models to determine a second object detected in the second set of edge data and a second confidence parameter associated with the second object; determining whether the first confidence parameter and the second confidence parameter are both at or above a confidence threshold; and determining whether the first object and the second object are a same object based upon one or more object parameters; wherein the method is performed using one or more processors. For example, the method is implemented according to at least FIG. 1, FIG. 2, FIG. 3 and/or FIG. 4. In certain examples, the one or more computing models include a large language model (LLM).

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented for example as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method for sensor correlation by a plurality of edge devices performed using one or more processors, the method comprising:
receiving a first set of edge data from a first edge device of the plurality of edge devices;
receiving a second set of edge data from a second edge device of the plurality of edge devices, the second edge device being different from the first edge device;
analyzing the first set of edge data using one or more computing models to determine a first object detected in the first set of edge data;
analyzing the second set of edge data using the one or more computing models to determine a second object detected in the second set of edge data; and
determining whether the first object and the second object are a same object based upon one or more object parameters.

2. The method of claim 1, further comprising:
generating an edge instruction based at least in part upon the determination of whether the first object and second object are a same object, the first set of edge data, and the second set of edge data; and
transmitting the edge instruction to the second edge device.

3. The method of claim 1 or claim 2, further comprising:
in response to the first object and the second object being determined to the same obj ect,
generating an edge instruction based upon the determined second object, the first set of edge data, and the second set of edge data; and
transmitting the edge instruction to the second edge device.

4. The method of claim 3, wherein the second edge device is configured to change a sensor parameter in response to receiving the edge instruction.

5. The method of any preceding claim, further comprising:
in response to the first object and the second object being determined to the same obj ect,
generating a calibration based on the first edge data, the second set of edge data, and the determined same object; and
providing the calibration to a third edge device to cause the calibration to be applied to a third set of edge data collected by the third edge device, the third edge device being different from the first edge device, the third edge device being different from the second edge device.

6. The method of any preceding claim, further comprising:
receiving a third set of edge data from a third edge device, the third edge device being different from the first edge device, the third edge device being different from the second edge device;
analyzing the third set of edge data to determine an operation parameter of the third edge device;
generating a third edge instruction based at least in part upon the determined first object, the determined operation parameter, and the third set of edge data; and
transmitting the third edge instruction to the third edge device.

7. The method of any preceding claim, further comprising:
storing the first set of edge data in a processing memory;
storing the second set of edge data in the processing memory; and
storing the one or more object parameters in the processing memory.

8. The method of claim 7, further comprising:
generating a first processing instruction, the first processing instruction includes an indication of a second computing device becoming a processing device, the second computing device being different from the first edge device; and
transmitting the first processing instruction to the second edge device.

9. The method of claim 8, further comprising:
providing access to the processing memory to the second computing device.

10. The method of any preceding claim, wherein the first set of edge data includes a set of raw sensor data collected by a first sensor associated with the first edge device;
wherein the second set of edge data includes a set of processed sensor data,
wherein the set of processed sensor data is generated based on a second set of the sensor data collected by a second sensor associated with the second edge device;
wherein the set of processed sensor data is smaller in size than the second set of the sensor data.

11. The method of claim 1, wherein the one or more computing models include a large language model.

12. A system for sensor correlation by a plurality of edge devices, the system comprising:
one or more memories having instructions stored therein; and
one or more processors configured to execute the instructions and perform operations according to any of claims 1 to 11.

13. A method for sensor correlation by a plurality of edge devices performed using one or more processors, the method comprising:
receiving a first set of edge data from a first edge device of the plurality of edge devices;
receiving a second set of edge data from a second edge device of the plurality of edge devices, the second edge device being different from the first edge device;
analyzing the first set of edge data using one or more computing models to determine a first object detected in the first set of edge data and a first confidence parameter associated with the first object;
analyzing the second set of edge data using the one or more computing models to determine a second object detected in the second set of edge data and a second confidence parameter associated with the second object;
determining whether the first confidence parameter and the second confidence parameter are both at or above a confidence threshold; and
determining whether the first object and the second object are a same object based upon one or more object parameters.

14. The method of claim 13, wherein the one or more computing models include a large language model.
